# EUROPEAN PATENT SPECIFICATION

(11) **EP 4 045 254 B1**
(45) Date of publication and mention of the grant of the patent: **25.12.2024**
(21) Application number: 20792494.5
(22) Date of filing: 12.10.2020
(51) Int. Cl.: B29C 31/06, B29C 43/34, B29C 48/25, B29C 48/255, B29C 48/285, B29C 48/92, B29C 31/04

(54) **SYSTEM FOR TRANSFERRING A DOSE DI POLYMERIC MATERIAL AND RELATIVE TRANSFER METHOD, METHOD FOR SUPPLYING A DOSE OF POLYMERIC MATERIAL**
SYSTEM ZUR ÜBERTRAGUNG EINER DOSIERUNG VON POLYMEREM MATERIAL UND ENTSPRECHENDES ÜBERTRAGUNGSVERFAHREN, VERFAHREN ZUR ZUFÜHRUNG EINER DOSIERUNG VON POLYMEREM MATERIAL
SYSTÈME POUR LE TRANSFERT D'UNE DOSE DE MATÉRIAU POLYMÈRE ET PROCÉDÉ DE TRANSFERT ASSOCIÉ, PROCÉDÉ DE DISTRIBUTION D'UNE DOSE DE MATÉRIAU POLYMÈRE

(30) Priority: 14.10.2019 IT 201900018725
(43) Date of publication of application: 24.08.2022
(73) Proprietor: SACMI COOPERATIVA MECCANICI IMOLA SOCIETA' COOPERATIVA, 40026 Imola (IT)
(72) Inventor: BALDISSERRI, Davide, 40026 Imola (Bologna) (IT)
(74) Representative: Persi, Patrizia
(86) International application number: PCT/IB2020/059561
(87) International publication number: WO 2021/074771

(56) References cited:
- EP-A1- 0 078 760
- EP-A1- 3 584 058
- EP-B1- 0 078 760
- WO-A1-2013/052829
- WO-A1-2016/005951
- WO-A1-2018/150782
- GB-A- 2 178 359
- JP-A- 2018 530 462
- JP-A- H05 345 347
- JP-A- S57 207 018
- US-A- 4 869 406
- US-A1- 2014 057 081

## Description

The invention relates to a system for transferring a dose of polymeric material from a supplying head to a conveying device and to a respective method for transferring the dose.

In particular, the invention relates to a system for transferring a dose of polymeric material and a relative transfer method, which can advantageously be used in an apparatus for producing, by compression moulding, concave articles, in particular containers.

The polymeric material supplied through the supplying head according to the invention and transferred to the conveying device may be used, for example, for producing articles such as capsules designed to contain a powdered or granular substance, such as coffee or the like, for preparing beverages or other food product fluids. Alternatively, the polymeric material supplied through the supplying head and transferred to the conveying device according to the invention may be used for producing articles such as preforms designed to be subjected to blowing or stretching-blowing process to form containers such as bottles. More generally speaking, the polymeric material may be used for making articles of any type, such as, for example glasses, jars or bowls.

The polymeric material may consist of a single material, or it may comprise a multi-layer structure, made from several superposed layers of polymeric materials different to each other.

Compression moulding apparatuses of known type comprise a supplying head for supplying the polymeric material, and at least one conveying device for collecting a dose of polymeric material supplied from the supplying head and conveying it. Compression moulding apparatuses of known type also comprise a separating device for separating the dose of polymeric material from the remaining polymeric material supplied and a compression mould which receives the dose conveyed by the conveying device.

In the compression moulds of the prior art apparatuses, the compression mould is provided with a male mould element and a female mould element, which is positioned below the male element, in such a way that the cavity of the female element faces upwards. The dose of polymeric material, after having been separated from the supplying head, is released inside the cavity of the female element from the conveying device, which makes the dose fall from the top towards the bottom of the cavity. Subsequently, the male element and the female element are moved towards each other to deform the dose, shaping it according to the desired geometry.

The release of the dose correctly inside the mould is a particularly critical operation on which depends the quality of the articles produced and is influenced by the position of the dose in the conveying device.

In fact, the conveying device comprises a conveying surface, which is configured for collecting the dose during the passage through the supplying head and to which the dose remains adhered until the moment of release in the compression mould. The position of the dose in the conveying surface therefore determines a position for releasing the dose in the mould and therefore directly determines the quality of the articles produced.

An apparatus of this kind is shown in international patent application WO2017/064601 by the same applicant.

To ensure the adhesion of the dose to the conveying surface is at the desired position, the polymeric material must be supplied in a correct supplying direction. This guarantees that the separating device correctly separates the dose from the remaining polymeric material and, above all, that the conveying surface intercepts the entire dose in the correct position. The polymeric material is supplied in a correct supplying direction if it is supplied in a substantially rectilinear, more precisely vertical, direction.

The correct supplying direction is, in other words, substantially coincident with an axis of a rectilinear outfeed region of a supplying duct in which the polymeric material flows.

The polymeric material is, in fact, supplied in the molten state.

However, the direction of supplying the polymeric material is dependent on the pressure and the speed of the polymeric material in the outfeed region, on the type of polymeric material, as well as on irregularities in the temperature distribution in the molten polymeric material which determines the distribution of viscosity inside it.

Consequently, if we consider a system for transferring a dose of polymeric material comprising the supplying head and at least one conveying device, the polymeric material can be supplied from the conveying head in an undesired direction and, therefore, the dose can remain adhered to the conveying surface in an incorrect position. This may make it difficult to mould items of the requested quality, since even the release of the dose in the mould may not be in a correct position.

The separating device may also introduce an alteration in the supplying direction of the dose. In fact, the separating device may be associated as one with the conveying device, as it is made as a cutting edge of it, or it may be made as a movable element, for example a cutting blade movable independently of the conveying device, which has a cutting direction opposite to the advancing direction of the conveying device. Especially in the last case, an impact may occur between the polymeric material supplied and the cutting blade, such as to modify the direction of the polymeric material supplied and therefore of the dose.

Therefore, also in this case, the dose may remain adhered to the conveying surface in an incorrect position, such as to make it difficult to mould items of the requested quality.

To control the direction of supplying the polymeric material supplied from a supplying head, it is known from patent document JP2005319667 that the supplying head is provided with a pin, inserting it in an outfeed region of the polymeric material, parallel to a longitudinal axis of the outfeed region itself, in order to prevent turbulence and make the flow of polymeric material to be supplied laminar. The pin is fixed to the supplying head at a bend of the supplying duct and extends through the bend in the outfeed region, which is positioned downstream of the bend.

A defect in the supplying head described in the above-mentioned document is that the presence of the bend in the supplying duct of the polymeric material requires that the supplying head has a supplying infeed positioned at right angles to the outfeed region.

This shape of the supplying head is clearly very specific and limiting and cannot be used in compression moulding apparatuses in which the supplying of the polymeric material is not orthogonal to the longitudinal axis of the outfeed region.

According to patent document JPH0834047 the supplying head is provided with a plurality of heating elements close to the outfeed for supplying the polymeric material and each of them is controlled individually. One problem of the supplying head described in the above-mentioned document lies in the fact that a distribution of the temperature of the polymeric material at the supplying outfeed cannot be controlled in a precise manner due to the thermal inertia of the polymeric material.

JPH05345347 discloses an extrusion molding apparatus suitable for extruding a multilayer film in which a plurality of layers is laminated, the distribution of thickness being controlled in a width direction. US4869406A discloses a discharge control device suitable for controlling the discharge of a molten material which includes a variable opening formed between two cylinders with parallel axes which avoids severe disturbance of the molten flow. Rotation of cylinders is provided by two parallel drive shafts driven in mutual mesh.

WO2013052829 discloses a feedblock for forming a laminate, wherein the thicknesses of the extrudates forming the laminate can be adjusted. The feedblock includes a housing having a primary inlet, one or more secondary inlets, and a laminate outlet wherein the extrudates in the laminate form at an approximate location where a primary flow path and/or the one or more secondary flow paths are juxtaposed. This approximate location is internal in the feedblock with respect to the laminate outlet.

EP0078760 discloses a variable gate for the casting of fused metallic or non-metallic materials comprising two cylinders having parallel axes and one common contact line, the cylinders being rotatable around their axes synchronously. Each of the cylinders has one groove with a varying cross section, so that the two grooves cooperate to form a symmetrical opening. JPS57207018 discloses a cutting device to cut plastic material precisely in length and weight, wherein a circumferential part of a tip of a hole of a nozzle is used as a fixed cutter.

US2014057081 discloses a device for producing and/or applying a substantially planar material combination which is formed from at least two surface regions, wherein the device comprises a conveying unit that defines a direction of travel and has a conveying surface. The device also comprises an application unit including an application nozzle which has a slit-shaped outlet which allows the first surface region made of a first extrudate and the second surface region made of a second extrudate to be extruded onto the conveying surface.

WO2016005951A1 discloses a method for continuous foaming of a panel comprising outer layers of web material between which an intermediate layer of insulating foam is interposed, comprises the steps of supplying a first and second web material, which are precursors of said outer layers, to a dispensing station wherein a liquid reactive mixture intended for generating the intermediate layer of insulating foam is dispensed. WO2018150782A1 discloses a rubber extrusion device and manufacturing method. A die attached to a head of a rubber extrusion device comprises an extrusion port variable member which is arranged at a front end of an extrusion flow path and which moves in a direction whereby an area of an extrusion port is changed.

In this context, the technical purpose of the invention is to propose a system for transferring a dose of polymeric material which comprises a supplying head for polymeric material and at least one device for transferring the dose supplied from the supplying head which overcomes at least some of the above-mentioned drawbacks of the prior art.

An aim of the invention is to improve the systems for transferring the dose, wherein in particular, but not exclusively, the polymeric material has a multi-layer structure.

An aim of the invention is to provide a system for transferring a dose of polymeric material which allows a direction of supplying the polymeric material to be controlled in such a way that the latter adopts a desired supplying direction, to allow a dose obtained from it to be correctly positioned inside a compression mould.

An aim of the invention is also to provide a system for supplying a dose of polymeric material wherein, although the polymeric material is supplied in the desired supplying direction, there are no design constraints in terms of positioning of the polymeric material and the supplying direction can be precisely controlled.

Another technical purpose of the invention is to propose a method for supplying polymeric material which overcomes at least some of the above-mentioned drawbacks of the prior art.

A further aim of the invention is to provide a supplying method which allows a direction of supplying the polymeric material to be controlled.

A different technical purpose of the invention is to propose a method for transferring a dose of polymeric material from a supplying head to a conveying device which overcomes at least some of the above-mentioned drawbacks of the prior art.

A different aim of the invention is to provide a method for transferring a dose which allows the dose of polymeric material to be made to adhere in the conveying device in the desired position in such a way that the dose is released in the compression mould in the correct position.

The technical purposes and aims specified above are substantially achieved by different embodiments of the invention.

The aims are also achieved by the further features described below, including the technical features described in one or more of the appended claims.

According to the invention, there is a system for transferring a dose of polymeric material according to claim 1.

Thanks to the system for transferring a dose according to the invention, it is possible to introduce a discontinuity in the outfeed region of the supplying duct of the supplying head varying in this way locally the speed of the polymeric material in the outfeed region, so as to promote a desired supplying direction of the polymeric material which allows the conveying device to intercept the dose in a correct desired position.

Thanks to the asymmetry in the outfeed region, the flow of polymeric material which flows in the outfeed region itself is in fact disturbed and, as a consequence, it is possible to control the supplying direction of the polymeric material.

A local variation of the viscosity of the material and of the relative temperature in the supplying head is produced as a secondary effect.

Advantageously, the asymmetry present between the first zone and in the second zone in the variation configuration can be applied to any supplying head, irrespective of the supplying configuration of the polymeric material to the supplying head, since it occurs in the rectilinear outfeed region of the supplying duct.

It should also be noted that, even if there is a device for separating the dose in the transfer system which can alter the supplying direction of the polymeric material itself, thanks to the possibility of controlling the direction of supplying the polymeric material, it is possible to compensate for this alteration and guarantee that the dose is transferred to the conveying wall of the conveying device in the correct direction.

According to a version, the first zone and the second zone are positioned inside the outfeed region and in the variation configuration, for producing this asymmetry, they project transversely towards the axis in a different manner modifying a transit cross-section of the outfeed region.

Thanks to the fact that the first zone and the second zone of the supplying head locally change the transit cross-section, it is possible to create in the variation configuration the localised discontinuity in the flow of polymeric material in a very simple and inexpensive manner.

The flow is disturbed and, in this way, it can be directed in the desired supplying direction.

In another version, the first zone projects transversely towards the axis, whilst the second zone is free of protrusions.

In this way, the transit cross-section of the outfeed region is modified by intervening only in the first zone of the outfeed zone and leaving the other zone unchanged.

According to a further version, the supplying head additionally has a resting configuration in which the first zone and the second zone are symmetrical relative to each other and comprise a variation device, configured to position the supplying head in the variation configuration or in the resting configuration.

Thanks to the variation device, the configuration of the supplying head can be varied in relation to the type of polymeric material supplied and its characteristics, in a simple and inexpensive manner.

According to an alternative version, the first zone and the second zone extend up to the supplying outfeed of the outfeed region and extend axially in a different manner, modifying a shape of the supplying outfeed. The first edge of the first zone and the second edge of the second zone which define at least partly the supplying outfeed are, in other words, offset axially and, for example, the first edge projects beyond the second edge.

Thanks to the fact that the shape of the supplying outfeed is modified, fluid streams of polymeric material in contact with the first zone continue to remain in contact with the outfeed region, whilst the remaining fluid streams from the second zone have already escaped from the supplying outfeed and this modifies the outfeed direction of the polymeric material supplied, which may be transferred to the conveying device.

According to a version of the invention, it is provided also a method for supplying a polymeric material comprising the following steps:
- feeding the polymeric material to a supplying outfeed of a supplying head by means of a straight outfeed region which extends along an axis;
- configuring a first zone and a second zone of the outfeed region which are facing each other in a variation configuration, in which they are asymmetrical, for disturbing a flow of polymeric material in the outfeed region so as to control a supplying direction of the polymeric material supplied from the supplying outfeed; wherein said control of the supplying direction comprises:
- directing the disturbed polymeric material in a desired supplying direction.

Thanks to the supplying method, the control of the supplying direction is simple and inexpensive as it is based on the arrangement of an asymmetry between facing zones of the outfeed region of a supplying head which is able to disturb a flow of polymeric material, directing it in a desired direction. In one version there is the step of selecting the desired supplying direction with respect to a conveying wall of a conveying device.

Thanks to that version, the method according to the invention allows the desired supplying direction to be selected with respect to the conveying wall, for example to consider a mutual inclination between the conveying wall and the supplying direction.

According to the invention there is also a method for transferring a dose of polymeric material from a supplying head to a conveying device according to claim 14.

The conveying wall may be flat.

Thanks to the transfer method according to the invention, the polymeric material supplied from the supplying head in a supplying direction, controlled by the supplying method according to the invention, is positioned inclined towards the conveying wall of the conveying device, in such a way that, after separating the dose, the dose can adhere completely to the conveying wall.

By forcing the supplying direction, it is therefore possible to make the dose adhere correctly in the conveying wall and improve the quality of the release of the dose to the compression mould, guaranteeing a greater quality of the articles produced by the compression mould.

In a variant, it is advantageous to use the supplying method according to the invention for effectively controlling the desired supplying direction.

The invention can be better understood and implemented with reference to the accompanying drawings which illustrate a non-limiting example embodiment of it and in which:
Figure 1 is a top view of a supplying head for polymeric material comprising a supplying duct having an outfeed region, provided with an axis, which leads into a supplying outfeed, the outfeed region being a parallelepiped with a rectangular cross section;
Figure 2 is a cross-section view of the supplying head of Figure 1 along the section plane II-II of Figure 1, comprising a variation device made as a roller, in a resting configuration in which a first zone and a second zone of an outfeed duct, facing each other and which extend inside the duct, are symmetrical;
Figure 3 is a cross-section view of system for transferring a dose according to the invention, which comprises the supplying head of Figure 1 shown along the section plane III-III, wherein the variation device is in the resting configuration of Figure 2, and a conveying device, for collecting the dose supplied from the supplying head;
Figure 4 is the cross-section view of Figure 3, in which the variation device is in a variation configuration in which the first zone and the second zone are asymmetrical to each other;
Figure 4a is an enlargement of Figure 4, which shows a cylindrical part of a version of the roller of Figure 4, at the first zone;
Figure 5 is a cross-section view of a variant of the supplying head of Figure 1 along the section plane II-II of Figure 1, comprising a variant of the variation device made as a pin, in the resting configuration, in which the first zone and the second zone of the outfeed duct extend inside the duct and are symmetrical;
Figure 6 is a cross-section view of a variant of the transfer system of Figure 3, which comprises the supplying head of Figure 5, along the section plane III-III of Figure 1, wherein the variation device of Figure 5 is in the resting configuration, and the conveying device of Figure 3;
Figure 7 is the cross-section view of Figure 6, wherein the variation device of Figure 5 is in the variation configuration in which the first zone and the second zone are asymmetrical to each other;
Figure 8 is a cross-section view of a variant of the supplying head of Figure 1, along the section plane III-III of Figure 1, in the variation configuration, which has a first zone and a second zone which are asymmetrically relative to each other and which extend up to the supplying outfeed, the first zone and the second zone having a respective first edge and second edge which at least partly define the supplying outfeed which are offset along the axis.

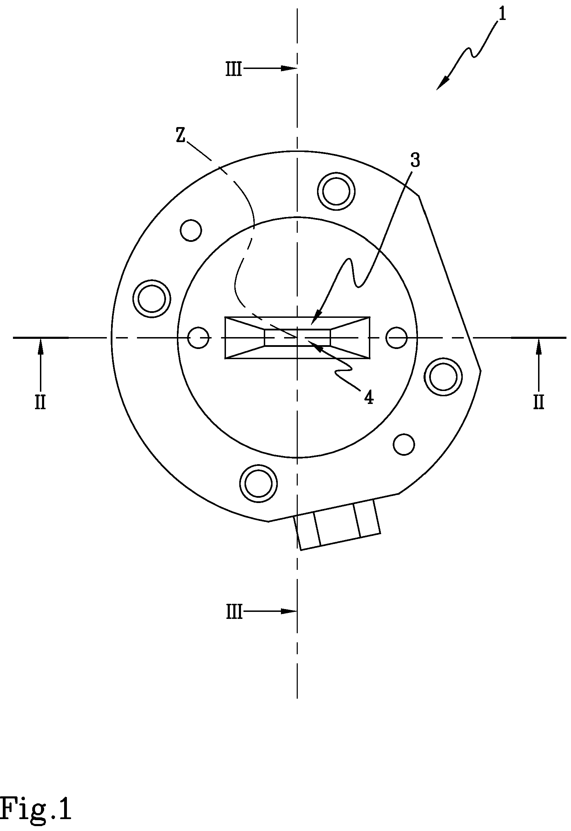

Figures 1 to 8 show a supplying head 1 for a polymeric material (not illustrated) which is separated, by means of a separating device (not illustrated) for example a knife, from the remaining polymeric material supplied in such a way as to form a dose 2.

It should be noted that, in the various drawings, the same numbers will be associated with the same components.

The supplying head 1 may comprise a coextrusion device (not illustrated) for supplying a continuous coextruded structure (not illustrated) of polymeric material comprising a plurality of layers of polymeric materials different to each other, for example a central functional layer, interposed between two outer layers. The central functional layer may comprise a material having barrier properties, for example to gases and/or oxygen and/or light. The outer layers, which may be equal or different to each other, can be made with materials designed to give the desired mechanical and/or aesthetic properties to the articles which will be obtained. Respective auxiliary layers can be interposed between the outer layers and the central layer, for example, a layer of compatibilization material having the aim of improving the adhesion between the central layer and the outer layers.

Alternatively, the supplying head 1 may comprise an extrusion device (not illustrated) positioned for extruding a single material continuous structure, that is to say, made with a single polymeric material instead of a plurality of polymeric materials different to each other.

The supplying head 1 comprises a duct 3 which is provided with an outfeed region 4 which is rectilinear and extends along an axis Z. The outfeed region 4 is configured for supplying the polymeric material to a supplying outfeed 5.

For example, in order to separate the dose 2, the knife can be moved in a plane which is substantially perpendicular to the axis Z and is tangential to the supplying outfeed 5. In other words, the surface on which the knife can move forms an angle close to 90° with the axis Z and it is also as close as possible to the supplying outfeed 5.

The outfeed region 4 is shaped like a prism having at least four faces and the supplying outfeed 5 has, in particular, a rectangular shape so as to supply a continuous structure of polymeric material shaped like a strip having a rectangular cross-section. The supplying outfeed 5 may also, alternatively, in a version not illustrated, have a square or tubular shape. If the transversal cross section of the strip is rectangular, the base of the rectangle may be much greater than the height, even if this condition is not necessary.

In the example shown in the accompanying drawings, the supplying outfeed 5 is facing downwards since the supplying head 1 is configured for supplying a continuous structure downwards, according to an outfeed direction of the polymeric material which is vertical or substantially vertical and coincides with the axis Z. However, this condition is not necessary, as described below.

The supplying head 1 according to the invention may advantageously be used in an apparatus (not illustrated) comprising a moulding carousel (not illustrated) rotatable about a respective axis positioned vertically. The moulding carousel is provided, in a relative peripheral region, with a plurality of moulds (not illustrated) each of which is configured for shaping the dose 2 of polymeric material to obtain a respective article by compression moulding.

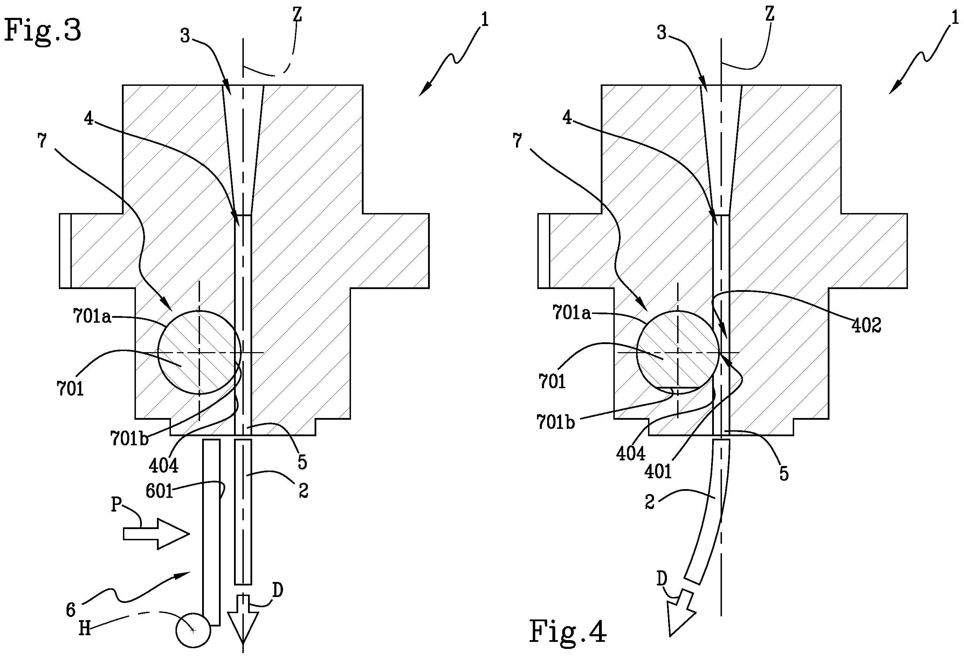

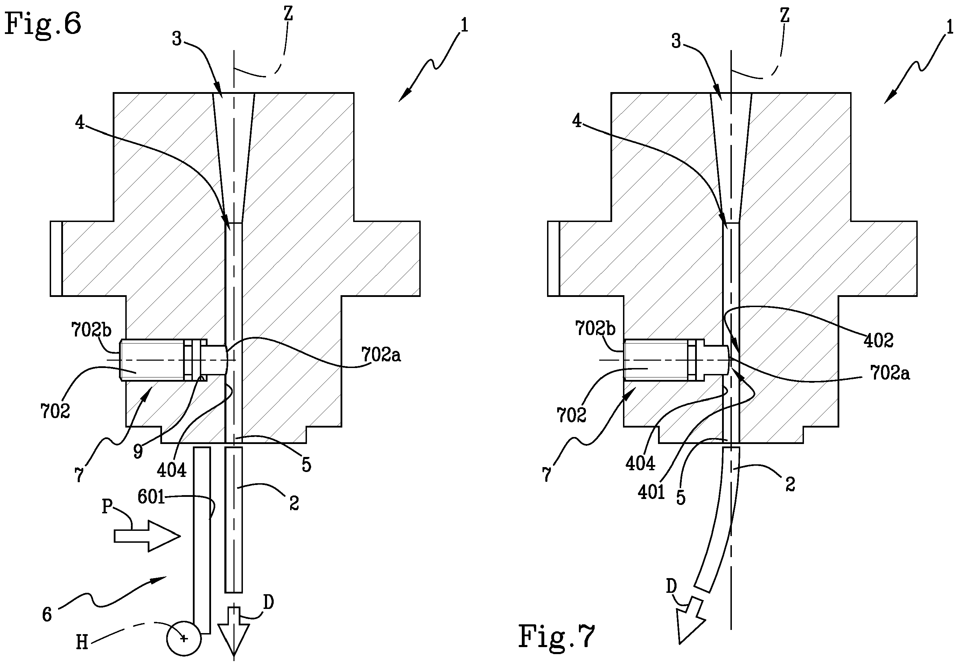

The apparatus may comprise a transport carousel (not illustrated) for collecting the dose 2 of polymeric material supplied from the supplying head 1 and conveying it to a mould. The transport carousel may comprise a plurality of conveying devices 6, one of which is shown in Figures 3 and 6. Each of the conveying devices 6 is positioned for conveying, for example, towards the moulding carousel, the dose 2 of polymeric material.

The conveying device 6 comprises a conveying wall 601, which may be flat, and is configured to retain the dose 2, which remains adhered to it, during the movement of the conveying device 6 along a path P through the supplying head 1.

The conveying device 6 is therefore configured for transferring to the conveying wall 601 the dose 2 obtained from the polymeric material supplied from the supplying head 1.

The transport carousel is configured to rotate about an axis, not illustrated, which is vertical. During rotation each conveying device 6 moves along the path P which may be a closed path, for example a circular path about the vertical axis, or an open path, for example linear.

Along the path P, each conveying device 6 is also configured to perform a rotation about an axis H, for modifying the orientation of the dose 2 collected and delivering it to a mould in a transversal fashion to a moulding direction. An apparatus of this kind is described in patent application WO2017/064601 in the name of the same applicant as this invention.

The conveying wall 601 is shown in Figures 3 and 6 and it is flat.

Alternatively, according to an embodiment not illustrated, the conveying device 6 can comprise an element having a U-shaped cross-section, if a plane at right angles to the vertical axis of rotation of the carousel is considered, which does not change the relative orientation during the rotation in the path P through the supplying head 1 and it is fixed. The conveying wall can, in this case, be a bottom wall of the "U", the dose remaining delimited by the side arms of the "U".

Other arrangements are also possible for the conveying device 6, providing they are suitable to allow the conveying device 6 to retain the polymeric material during the advancing through the supplying head 1.

According to the invention, a system is provided comprising the supplying head 1 and at least one conveying device 6, provided with the respective conveying wall 601, which is configured for advancing along the path P through the supplying head 1 transferring to the conveying wall 601 the dose 2 obtained from the polymeric material supplied from the supplying head 1. The dose 2 is collected from the supplying outfeed 5.

According to the invention, the outfeed region 4 comprises at least a first zone and a second zone facing each other and the supplying head 1 has at least one variation configuration in which the first zone and the second zone are asymmetrical to disturb a flow of polymeric material in the outfeed region 4 in such a way as to control the supplying direction D of the polymeric material, supplied from the supplying outfeed 5 and to transfer to the conveying wall 601.

The fact that the first zone and the second zone are asymmetrical therefore allows the disturbance of the flow of polymeric material which is configured for directing the polymeric material in a desired supplying direction D with respect to the conveying wall 601.

The term "supplying direction" D means an axis of symmetry of the polymeric material supplied.

Thanks to the asymmetry between the first zone and the second zone in the variation configuration, the outfeed region 4 of the supplying head 1 may be varied in a localised manner for influencing the flow of polymeric material, varying the supplying direction D.

The supplying direction D of the polymeric material coincides with the direction of supplying the dose 2 which is separated from the polymeric material.

By controlling the supplying direction D it is therefore possible to the control the method by which conveying device 6 collects the dose 2 from the supplying outfeed 5 and it is also possible to maximise the adhesion of the dose D to the conveying wall 601 of the conveying device 6.

It should be noted that the disturbance of the flow of polymeric material in the outfeed region 4, thanks to the asymmetry, is configured for directing the polymeric material in a desired supplying direction with respect to the conveying wall 601.

For example, the desired supplying direction may be inclined and, as described below, a distal end 2a of the dose 2 may be nearer the conveying wall 601 than its proximal end 2b.

It should also be noted that the transfer system according to the invention can comprise, in addition, the separating device, that is, the knife, for separating the dose 2 of polymeric material from the remaining polymeric material supplied from the supplying outfeed 5, the dose 2 obtained in this way being collected from the conveying device 6 and being transferred to it. As mentioned above, the knife is movable with respect to the supplying head 1 and the conveying device 6. Even though an impact can occur between the knife and the polymeric material supplied which could alter the supplying direction of the dose 2, the disturbance of the flow of material in the outfeed region 5 is able to control also in this case the desired supplying direction D with respect to the conveying wall 601. In fact, by directing the polymeric material supplied from the supplying outfeed 5, it is possible to also compensate for any alteration due to the knife.

Figures 1 to 7 show a supplying head 1 in which there are a first zone 401 and a second zone 402 which are positioned inside the outfeed region 4. In order to produce this asymmetry, the first zone 401 and the second zone 402 project towards the axis Z in a different manner and modify a transit cross-section of the outfeed region 4.

In other words, the first zone 401 and the second zone 402 project towards the axis Z relative to respective areas surrounding the outfeed region 4 in a different manner, to introduce a discontinuity on one side of the outfeed region 4 and therefore control the direction D of supplying the polymeric material. The asymmetrical nature lies in the different shape of the first zone 401 relative to the second zone 402.

For example, the first zone 401 projects towards the axis Z whilst the second zone 402 is free of protrusions.

In that way, a fluid stream of polymeric material in contact with the first zone 401 slows down, while on the opposite side, in contact with the second zone 402, the polymeric material supplied flows without modifying its speed because it is undisturbed. This allows the polymeric material supplied to be locally disturbed and the polymeric material directed in the desired supplying direction D.

The desired supplying direction D may be a rectilinear direction, in such a way that the polymeric material is supplied substantially vertically.

However, the Applicant has observed that the desired supplying direction may also be that wherein the polymeric material comes out inclined towards the conveying wall 601, when the conveying wall 601 advances through the supplying head 1, in such a way that, during transfer of the dose 2, a distal end 2a of the dose 2 is closer to the conveying wall 601 than its proximal end 2b.

In other words, in the system comprising the supplying head 1 and the conveying device 6 the disturbance of the flow of can be configured to incline the polymeric material supplied towards the conveying wall 601 during the transfer of the dose 2, as described above.

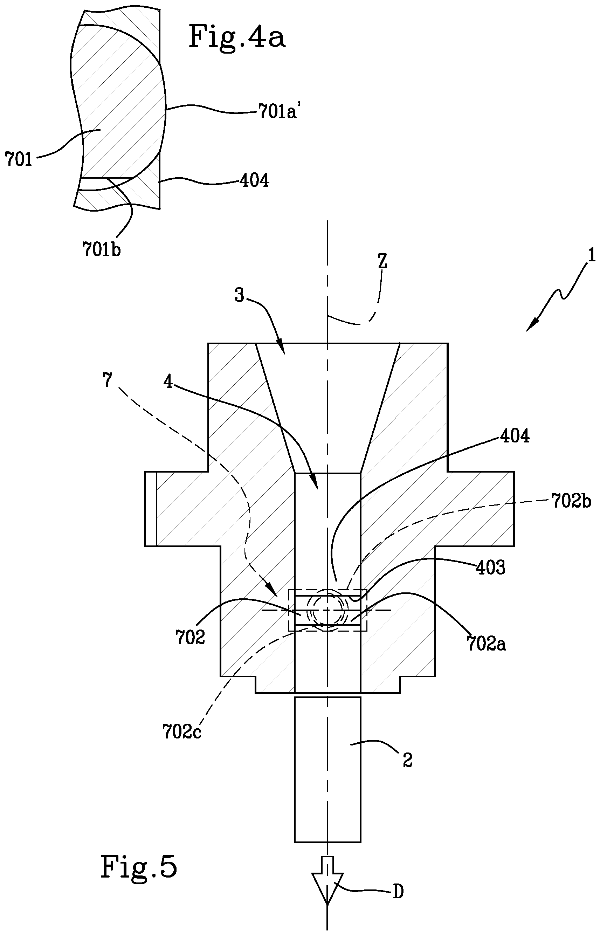

For example, the presence of the slowing down in the fluid stream of the polymeric material in contact with the first zone 401 modifies the flow speed of the polymeric material in the outfeed region 4 and may cause a disturbance in the flow such that the polymeric material is inclined towards the conveying wall 601, as illustrated in Figures 4 and 7.

This guarantees that the dose 2 remains entirely adherent to the conveying wall 601 when the conveying wall moves in the path P through the supplying head 1.

However, alternatively, in a manner not illustrated, the polymeric material may be inclined away from the conveying wall 601, that is, the distal end 2a of the dose 2 may be further from the conveying wall 601 than the relative proximal end 2b.

The supplying head 1 has, in addition, a resting configuration in which the first zone 401 and the second zone 402 are symmetrical so as to leave undisturbed the direction of supplying the polymeric material from the supplying outfeed 5.

The supplying head can be controlled between the variation configuration and the resting configuration.

In fact, the supplying head 1 comprises a variation device 7, which can be configured to position the supplying head 1 in the variation configuration or in the resting configuration.

The variation device 7 is housed inside the supplying head 1 but can be controlled from the outside of the supplying head 1 to configure it in the variation configuration or in the resting configuration.

In this way, an operator can decide whether to place the variation device 7 in the variation configuration, to render locally asymmetrical the outfeed region 4 in such a way as to control the supplying direction D of the polymeric material, or if this is not necessary.

At the same time, the variation configuration of the variation device 7 may be made fixed over time if the possibility of configuring the variation device 7 is not of interest. For example, for some types of polymeric material, the localised discontinuity in the outfeed zone 4 could always be necessary to guarantee the desired supplying direction D.

In fact, as mentioned above, the supplying direction D of the polymeric material is often dependent on a plurality of variables, often interconnected, including the type of polymeric material to be supplied and it may be necessary to place the variation device in the variation configuration for one type of polymeric material but not for another.

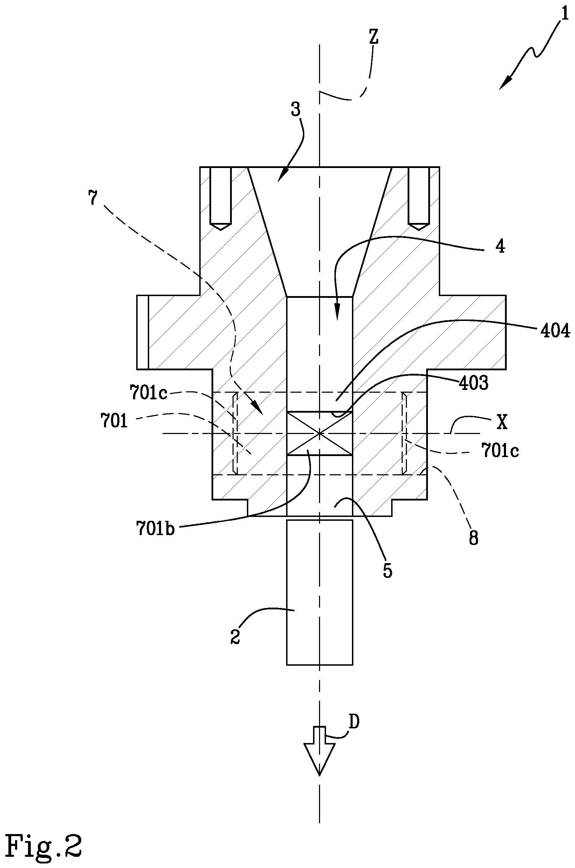

As shown in Figures 2 to 7, the second zone 402 is free of projections and the outfeed region 4 comprises an opening 403 positioned facing the second zone 402.

The variation device 7 has a variation surface, which protrudes through the opening 403 for making the first zone 401, when the variation device 7 is in the variation configuration.

When, on the other hand, the variation device 7 is in the resting configuration, the variation surface is aligned with the opening 403 and with an area 404 of the outfeed region 4 which surrounds the opening 403. This means that the asymmetry between the first zone 401 and the second zone 402 in the variation configuration, as well as the variation of the transit cross-section, is given by the fact that only the first zone 401 projects towards the axis Z transversely whilst, on the other hand, the second zone 402 is aligned with the outfeed region 4. In the second zone 402, the outfeed region 4 of the duct 3 remains unchanged.

As illustrated in Figures 2 to 4, the variation device is made as a roller 701 which is rotatable. The roller 701 has an axis of rotation X which lies in a plane transversal, in particular perpendicular, to the axis Z, and is located at a predetermined distance from the axis Z. The roller 701 is housed in a through hole 8 of the supplying head 1, through which, in a manner not illustrated, it can be rotated by an operator.

The roller 701 is provided with a lateral surface comprising at least one cylindrical surface 701a. The lateral surface of the roller 701 also comprises a flat surface 701b. The roller 701 is also delimited by opposite end faces 701c which lie in planes parallel to the axis Z.

In the variation configuration, the roller 701 has a portion of the cylindrical surface 701a which protrudes through the opening 403 and defines the variation surface. The first zone 401, projecting relative to the area 404 surrounding the opening 403, is therefore made by means of the portion of the cylindrical surface of the roller 701 which passes through the opening 403. The first zone 401 in the variation configuration is curved.

In the resting configuration, the roller 701 has a portion of the flat surface 701b aligned with the opening, which therefore defines the variation surface, aligned with the surrounding area 404.

According to a version schematically illustrated in Figure 4a, the roller 701 may have a plurality of angular sectors, each angular sector having a respective cylindrical surface provided with a respective curvature, the curvatures of the cylindrical parts all being different from each other.

In other words, the roller 701 may be divided into angular lobes, each having a cylindrical lateral surface shaped differently, for example having a respective curvature.

For example, the roller 701 may be divided into four angular sectors, which each extend, for example, by 90°. In a first angular sector the lateral surface of the roller 701 may have the flat surface 701b, in a second angular sector it may have a first cylindrical surface 701a with a first curvature, for example with the same curvature as the cylindrical surface shown in Figure 4, and that is to say, with a first radius, in a third angular sector it may have a second cylindrical surface 701a' with a second curvature, that is to say, a second radius, as shown in the enlargement of Figure 4a, and lastly in a fourth angular sector it may have a third cylindrical surface it may have a third cylindrical surface, not illustrated, with a third curvature, and that is to say, with a third radius.

In the case of a roller 701 shaped in angular sectors, wherein the cylindrical surface 701a, 701a' has a plurality of different curvatures, by rotating the roller 701 it is possible to display through the opening 403 a portion of the lateral surface of the roller, which may be selected, for example, between the first cylindrical surface 701a, the second cylindrical surface 701a' or the third cylindrical surface. In other words, the variation surface may be selected in the variation configuration in such a way as to be shaped more or less protruding towards the axis Z in relation to the type of polymeric material to be supplied.

It should be noted, however, that the roller 701 can be fixed in a position to expose one of the cylindrical surfaces and kept fixed over time without the need for further adjustment.

As illustrated in Figures 5 to 7, the variation device 7 is made as a pin 702. The pin 702 is housed in a respective compartment 9 open towards the outside.

The pin 702 has a front surface 702a which defines the variation surface.

In the variation configuration, shown in Figure 7, the pin 702 is in a forward position and the front surface 702a extends through the opening 403 to define the first zone 401. The front surface 702a is shaped substantially like the opening 403.

The pin 702 may be movable linearly away from and towards the axis Z in a direction of movement which lies in a plane transversal, in particular perpendicular, to the axis Z. The pin 702 may be movable between the advanced position and a withdrawn position.

The advanced position of the pin 702 is adjustable, to allow the passage cross-section of the outfeed region 4 to be adjusted.

In other words, it is possible to adjust how much the front surface 702a of the pin 702 protrudes relative to the surrounding area 404.

It should be noted that this is an adjustment which is made before the start of supplying the polymeric material and depends on the rheological properties of the polymeric material.

If for the roller 701 the first zone 401 is defined at design stage by the curvature of the cylindrical surface, or by the plurality of curvatures of the cylindrical parts if the roller 701 has a plurality of angular sectors, the first zone 401 made using the pin 702 can be adjusted in such a way that it is more or less protruding.

It should be noted, however, that the pin 702 may be fixed in a position and kept fixed over time without need for further adjustment.

For the pin 702, the asymmetry between the first zone 401 and the second zone 402 is also determined by the shape of the front surface 702a of the pin 702, which may be rounded or substantially flat with bevelled edges.

For this purpose, in order to optimise the control of the supplying direction D in relation to the type of polymeric material, it is possible to provide interchangeable pins 702 which differ in the curvature of the front surface 702a, which is more or less pronounced.

In the resting configuration of Figure 6, the pin 702 is in a withdrawn position and the front surface 702a is aligned with the area 404 of the outfeed region 4 which surrounds the opening 403.

The pin 702, housed in the compartment 9, exposes towards the outside of the supplying head 1 a bottom surface 702b in which there is an adjusting grub screw 702c, with which an operator can adjust the movement of the pin 702 between the advanced position and the retracted position. By means of adjustment grub screw 702c, an operator can adjust how much the pin 702 extends in the outfeed region 4.

According to a variant of the supplying head 1, not illustrated, in the variation configuration, the first zone 401 and the second zone 402 are positioned inside the outfeed region 4 and have a different temperature, for modifying a localised temperature distribution of the polymeric material.

In other words, the first zone 401 and the second zone 402 are thermally conditioned in a different manner and therefore have a thermal asymmetry. The thermal asymmetry is achieved by means of heat generation devices powered by different voltages which therefore develop different powers. The supplying direction of the polymeric material, and, if necessary, its possible inclination, may be displayed on a screen designed for consultation by machine operators.

The thermal conditioning of the first zone 401 and of the second zone 402 can also comprise a differentiated cooling, for a better control of the thermal asymmetry.

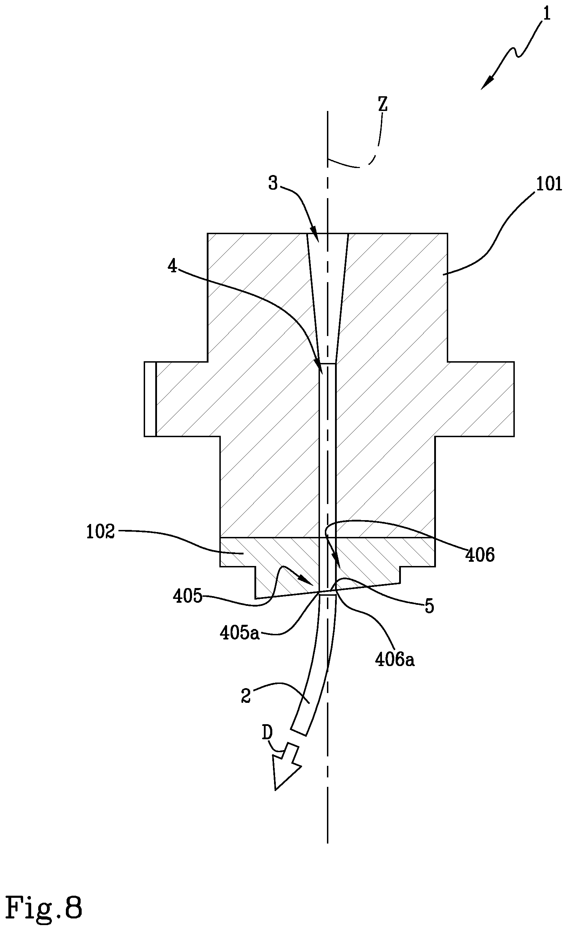

Thanks to this thermal asymmetry, located inside the outfeed region 4 and therefore far from the supplying outfeed 5, it is possible to control the temperature distribution in the polymeric material and therefore ensure that the supplying direction D at the supplying outfeed 5 is the desired one. Figure 8 shows a variant of the supplying head 1 in which the outfeed region 4 comprises a first zone 405 and a second zone 406 which extend up to the supplying outfeed 5 and have a respective first edge 405a and second edge 406a which at least partly define the supplying outfeed 5.

In this variant, in the variation configuration, the first edge 405a and the second edge 406a are offset from each other along the axis Z.

For example, as shown in Figure 8, the supplying outfeed 5 is inclined, relative to the axis Z, and the second edge 406a is therefore withdrawn relative to the first edge 405a, the first zone 405 protruding from the second zone 406.

The first zone 405 and the second zone 406 are at least facing each other. It should be noted that the variation configuration, if the first zone 405 and the second zone 406 extend as far as the supplying outfeed 5, remains fixed over time.

Different shapes and angles of the supplying outfeed 5 are possible, depending on the type of polymeric material to be supplied. For example, if the angle of inclination is close to 90°, the first zone 405 and the second zone 406 are almost aligned, whilst if there is a smaller angle of inclination, the first zone 405 and the second zone 406 may also be very offset along the axis Z.

Alternatively, according to an embodiment not illustrated, the first edge 405a and the second edge 406a of the supplying outfeed 5 may be on different planes and, therefore, the supplying outfeed 5 may be on two levels, the second edge 406a being withdrawn relative to the first edge 405a. For example, the second zone 406 may extend angularly only for a part of the outfeed region 5 whilst the first zone 405 may extend over the remaining angular part.

The supplying outfeed 5, which is asymmetrical, is such that a fluid stream of polymeric material, in contact with the first zone 405, slows down, whilst on the opposite side the polymeric material supplied is free and does not change its speed.

This asymmetric arrangement of the first zone 405 and of the second zone 406 locally disturbs the polymeric material supplied and thus allows the polymeric material to be directed in the desired supplying direction D.

To allow an easy configuration of the supplying head 1, the supplying head comprises an inner zone 101 and an end zone 102, the end zone 102 being removably mountable on the inner zone 101. A part of the outfeed region 4 is formed on the end zone 102, which comprises the first zone 405 and the second zone 406 which are offset from each other and which extend up to the supplying outfeed 5.

In this way, the end zone 102 of the supplying head 1 can be removed and replaced with another one which has a different shape of the supplying outfeed 5, for example more or less inclined.

According to a version not illustrated, if the supplying outfeed 5 is inclined relative to the axis Z, it may be advantageous to incline the supplying head 1 until positioning the supplying outfeed 5 on a plane substantially parallel and tangential to the movement plane of the knife, to guarantee that the knife separates the dose 2 from the remaining polymeric material supplied on the same plane in which the supplying outfeed 5 lies.

For example, if the dose 2 must be supplied vertically, the knife separates the dose 2 from the remaining polymeric material in a substantially horizontal movement plane.

If the supplying outfeed 5 is inclined by a predetermined angle relative to the axis Z, it may be advantageous to position the supplying head 1 rotated by an angle complementary to the angle of inclination of the supplying outfeed 5 so that the supplying outfeed 5 is also positioned horizontally, tangential to the movement plane of the knife.

In the resting configuration, the end zone 102 of the supplying head 1 has a first zone 405 and a second zone 406 free of asymmetry, that is to say, the first edge 405a and the second edge 406a extend aligned with each other.

As stated above, it also applies for this version of the supplying head 1 that the desired supplying direction D may also be that in which the polymeric material escapes inclined towards the conveying wall 601 in such a way that, during the transfer of the dose 2 along the path P, a distal end 2a of the dose 2 is closer to the conveying wall 601 than its proximal end 2b.

For example, if it is the first zone 405 which slows down the polymeric material and the first zone 405 is upstream of the second zone 406 in the direction of forward movement of the conveying wall along the path P, it is advantageous that the polymeric material is curved and inclined towards the first zone 405 itself, that is, towards the conveying wall 601.

The desired supplying direction D is in this case inclined.

If, as mentioned above, the cross-section of the supplying outfeed 5 is rectangular and the outfeed region 4 is shaped like a prism having at least four faces, the first zone 401 and the second zone 402 are positioned on opposite faces of the prism if the first zone 401 and the second zone 402 are positioned inside the outfeed region 4.

Also if the first zone 405 and the second zone 406 extend up to the supplying outfeed 5 and the supplying outfeed 5 is inclined, the first zone 401 and the second zone 402 are positioned on opposite faces of the prism. In use, a method is proposed for supplying a polymeric material which comprises the following steps:
- feeding the polymeric material to a supplying outfeed 5 of a supplying head 1 by means of a straight outfeed region 4 which extends along an axis Z;
- configuring a first zone 401, or 405, and a second zone 402, or 406, of the outfeed region 4 which are facing each other in a variation configuration, in which they are asymmetrical, for disturbing a flow of polymeric material in the outfeed region 4 so as to control the supplying direction D of the polymeric material supplied from the supplying outfeed 5; wherein said control of the supplying direction comprises:
   - directing the disturbed polymeric material in a desired supplying direction.

In other words, the method comprises configuring the asymmetry in the outfeed region in such a way as to generate the disturbance of the flow of polymeric material supplied from the supplying outfeed 5 and therefore directing the plastic material in the desired supplying region.

In addition, the method comprises the step of selecting the desired supplying direction with respect to the conveying wall 601 of the conveying device 6, for example inclining the polymeric material supplied.

The method also comprises the step of positioning the first zone 401 and the second zone 402 inside the outfeed region 4 and modifying a transit section of the outfeed region 4 to produce the asymmetry, in such a way that the first zone 401 and the second zone 402 project towards the axis Z in a different manner.

Alternatively, the method may comprise the step of positioning the first zone 401 and the second zone 402 in such a way that they extend up to the outfeed region 4, creating asymmetry in such a way that a first edge 405a and a second edge 406a which define at least partly the supplying outfeed 5 are offset from each other along the axis Z.

In both cases, this method allows the supplying direction D of the polymeric material to be controlled in such a way that it is the desired one, in a simple and inexpensive manner.

A method is also proposed for transferring a dose 2 of polymeric material from a supplying head 1 to a conveying device 6 comprising a conveying wall 601, the method comprising the step of:
- supplying the polymeric material from the supplying head 1 in a supplying direction D;
- controlling the supplying direction D of the polymeric material;
- separating a dose 2 of polymeric material from the polymeric material supplied from the supplying head 1;
- making the conveying wall 601 move towards the supplying head 1 and transferring the dose of polymeric material to the conveying wall 601;
- wherein said controlling of the supplying direction of the polymeric material comprises inclining the polymeric material supplied towards the conveying wall 601 in such a way that, during the transfer of the dose 2, a distal end 2a of the dose 2 is nearer the conveying wall 601 than its proximal end 2b.

The supplying direction D of the polymeric material can be controlled by the supplying method according to the invention, which comprises making an asymmetry in the outfeed region and directing the disturbed plastic material by means of the asymmetry in the desired supplying direction.

Thanks to the transfer method according to the invention, the dose 2 is advantageously moved inclined towards the conveying wall 601, as shown in Figures 4, 7 and 8. This guarantees that the dose 2 adheres to the conveying wall 601 in the desired manner to guarantee the optimum release to a respective compression mould.

## Claims

1. A system for transferring a dose (2) of polymeric material comprising a head (1) for supplying the polymeric material and at least one conveying device (6), provided with a conveying wall (601); said conveying device (6) being configured for advancing along a path (P) through the supplying head (1) such that a dose (2) obtained from the polymeric material supplied from the supplying head (1) may be transferred to the conveying wall (601); and wherein the supplying head (1) comprises a duct (3) which is provided with a straight outfeed region (4) extending along an axis (Z) which leads into a supplying outfeed (5) and is configured to supply the polymeric material to said supplying outfeed (5); **characterized in that** said outfeed region (4) comprises at least a first zone (401; 405) and a second zone (402; 406) facing each other, the supplying head (1) having at least one variation configuration in which the first zone (401; 405) and the second zone (402; 406) are asymmetrical to disturb a flow of polymeric material in the outfeed region (4) in such a way as to control the supplying direction (D) of the polymeric material, supplied from the supplying outfeed (5), and to be transferred to the conveying wall (601); wherein the disturbance of the flow of polymeric material in the outfeed region (4) is configured for directing the polymeric material in a desired supplying direction (D) with respect to the conveying wall (601), the desired supplying direction being inclined and being such that a distal end (2a) of the dose (2) is nearer the conveying wall (601) than its proximal end (2b); wherein the transfer system comprises a separating device for separating a dose (2) of polymeric material from the remaining polymeric material supplied from the supplying outfeed (5), the dose (2) obtained in this way being collected from the conveying device (6).

2. The transfer system according to claim 1, wherein in the variation configuration, the first zone (401; 405) and the second zone (402; 406) of the supplying head (1) are positioned inside the outfeed region (4) and project towards the axis (Z) differently, modifying a transit cross-section of the outfeed region (4), to produce that asymmetry.

3. The transfer system according to claim 2, wherein the supplying head (1) additionally has a resting configuration in which the first zone (401) and the second zone (402) are symmetrical relative to each other, the supplying head (1) comprising a variation device (7), configured to position the supplying head (1) in the variation configuration or in the resting configuration, the variation device (7) being housed inside the supplying head (1) and being controllable from the outside of the supplying head (1) between the variation configuration and the resting configuration.

4. The transfer system according to claim 3, wherein the second zone (402) is without projections and the outfeed region (4) comprises an opening (403) positioned opposite the second zone (402); and wherein the variation device (702) has a variation surface (701a; 702a) which projects through said opening (403) towards the axis (Z), said variation surface (701a; 702a) defining the first zone (401) when the variation device (7) is in the variation configuration.

5. The transfer system according to claim 4, wherein the variation device (701) is a rotary roller having an axis of rotation (X) which lies in a plane transversal, in particular perpendicular, to the axis (Z), which is provided with a lateral surface comprising at least one cylindrical surface (701a); wherein when the supplying head (1) is in the variation configuration, a portion of the cylindrical surface (701a) projects through the opening (403) and defines the variation surface.

6. The transfer system according to claim 5, wherein the roller (701) has a plurality of angular sectors, each angular sector having a respective cylindrical surface (701a; 701a') provided with a respective curvature, the curvatures of the cylindrical parts all being different from each other.

7. The transfer system according to claim 5, or 6, wherein the lateral surface also comprises a flat surface (701b); wherein when the supplying head (1) is in the resting configuration, the flat surface (701b) is aligned with an area (404) of the outfeed region (4) which surrounds the opening (403).

8. The transfer system according to claim 4, wherein the variation device (702) is a pin which comprises a front surface (702a) and wherein, when the supplying head (1) is in the variation configuration, the pin (702) is in a forward position and the front surface (702a) projects through the opening (403) defining the variation surface.

9. The transfer system according to claim 8, wherein the pin (702) is movable linearly away from and towards the axis (Z) along a line of movement which lies in a plane transversal, in particular perpendicular, to the axis (Z), wherein the pin (702) is movable between the forward position and a back position; the forward position of the pin (702) being adjustable to allow an adjustment of the transit cross-section.

10. The transfer system according to claim 8, or 9, wherein when the supplying head (1) is in the resting configuration, the pin (702) is in the back position and the front surface (702a) of the pin (702) is aligned with an area (404) of the outfeed region (4) which surrounds the opening (403).

11. The transfer system, according to claim 1, wherein the first zone (405) and the second zone (406) extend as far as the supplying outfeed (5) and have a respective first edge (405a) and second edge (406a) which at least partly define the supplying outfeed (5), wherein in the variation configuration the first edge (405a) and the second edge (406a) are offset relative to each other along the axis (Z).

12. The transfer system according to claim 11, wherein the supplying head (1) comprises an inner zone (101) and an end zone (102) , the latter comprising the first zone (405) and the second zone (406), the end zone (102) being removably mountable on the inner zone (101) to allow an easy configuration of the supplying head (1).

13. The transfer system according to one of the preceding claims, wherein the outfeed region (4) has the shape of a prism having at least four faces, the first zone (401) and the second zone (402) being positioned at least on opposite faces of the prism.

14. A method for transferring a dose (2) of polymeric material from a supplying head (1) to a conveying device (6), wherein the conveying device (6) comprises a conveying wall (601) and
the method comprises the following steps:
- supplying the polymeric material from the supplying head (1);
- controlling the supplying direction (D) of the polymeric material;
- separating a dose (2) of polymeric material from the polymeric material supplied from the supplying head (1);
- making the conveying wall (601) move forward towards the supplying head (1) and transferring the dose (2) of polymeric material to the conveying wall (601);
- wherein said controlling of the supplying direction (D) of the polymeric material comprises
- feeding the polymeric material to a supplying outfeed (5) of a supplying head (1) by means of a straight outfeed region (4) which extends along an axis (Z) and leads into said supplying outfeed (5);
- configuring a first zone (401) and a second zone (402) of the outfeed region (4) which are facing each other in a variation configuration, in which they are asymmetrical, for disturbing a flow of polymeric material in the outfeed region (4) so as to control the supplying direction (D) of the polymeric material supplied from the supplying outfeed (5);
- directing the disturbed polymeric material in a desired supplying direction (D);
- selecting the desired supplying direction (D) with respect to a conveying wall (601) of a conveying device (6);
- inclining the polymeric material supplied towards the conveying wall (601) in such a way that, during the transfer of the dose (2), a distal end (2a) of the dose (2) is nearer the conveying wall (601) than its proximal end (2b).

## Patentansprüche

1. System zur Übertragung einer Dosierung (2) von polymerem Material, umfassend einen Kopf (1) zum Ausgeben des Polymermaterials und zumindest eine Fördervorrichtung (6), die eine Förderwand (601) aufweist; wobei die Fördervorrichtung (6) dafür ausgelegt ist, entlang eines Pfades (P) durch den Ausgabekopf (1) vorgeschoben zu werden, so dass eine Dosierung (2), die von dem Polymermaterial erhalten wurde, das von dem Ausgabekopf (1) ausgegeben wurde, an die Förderwand (601) übertragen werden kann; und wobei der Ausgabekopf (1) einen Kanal (3) umfasst, der einen geraden Auslassbereich (4) aufweist, der sich entlang einer Achse (Z) erstreckt und in einen Ausgabeauslass (5) führt, und der dafür ausgelegt ist, das Polymermaterial dem Ausgabeauslass (5) zuzuführen; **dadurch gekennzeichnet, dass** der Auslassbereich (4) zumindest eine erste Zone (401; 405) und eine zweite Zone (402; 406) umfasst, die einander gegenüberliegen, wobei der Ausgabekopf (1) zumindest eine Variationskonfiguration aufweist, in der die erste Zone (401; 405) und die zweite Zone (402; 406) asymmetrisch zueinander sind, um einen Durchfluss von Polymermaterial in den Auslassbereich (4) zu beeinflussen und somit die Ausgaberichtung (D) des Polymermaterials zu steuern, das von dem Ausgabeauslass (5) ausgegeben wird und auf die Förderwand (601) zu übertragen ist; wobei die Beeinflussung des Durchflusses von Polymermaterial in den Auslassbereich (4) konfiguriert ist, um das Polymermaterial in eine gewünschte Ausgaberichtung (D) in Bezug auf die Förderwand (601) zu lenken, wobei die gewünschte Ausgaberichtung geneigt und derart beschaffen ist, dass ein distales Ende (2a) der Dosierung (2) näher an der Förderwand (601) ist als deren proximales Ende (2b); wobei des Übertragungssystem eine Trennvorrichtung umfasst, um eine Dosierung (2) von polymerem Material von dem restlichen Polymermaterial abzutrennen, das von dem Ausgabeauslass (5) ausgegeben wird, wobei die auf diese Weise erhaltene Dosierung (2) von der Fördervorrichtung (6) aufgenommen wird.

2. Übertragungssystem nach Anspruch 1, wobei in der Variationskonfiguration die erste Zone (401; 405) und die zweite Zone (402; 406) des Ausgabekopfs (1) innerhalb des Auslassbereichs (4) positioniert sind und unterschiedlich zu der Achse (Z) hin hervorstehen, so dass ein Durchgangsquerschnitt des Auslassbereichs (4) modifiziert wird, um diese Asymmetrie zu erzeugen.

3. Übertragungssystem nach Anspruch 2, wobei der Ausgabekopf (1) zusätzlich eine Ruhekonfiguration aufweist, in der die erste Zone (401) und die zweite Zone (402) symmetrisch zueinander sind, wobei der Ausgabekopf (1) eine Variationsvorrichtung (7) umfasst, die konfiguriert ist, um den Ausgabekopf (1) in der Variationskonfiguration oder in der Ruhekonfiguration zu positionieren, wobei die Variationsvorrichtung (7) in dem Ausgabekopf (1) untergebracht ist und von außerhalb des Ausgabekopfs (1) steuerbar ist zwischen der Variationskonfiguration und der Ruhekonfiguration.

4. Übertragungssystem nach Anspruch 3, wobei die zweite Zone (402) ohne Vorsprünge ist und der Auslassbereich (4) eine Öffnung (403) umfasst, die gegenüber der zweiten Zone (402) angeordnet ist; und wobei die Variationsvorrichtung (702) eine Variationsoberfläche (701a; 702a) aufweist, die durch die Öffnung (403) zu der Achse (Z) hin hervorsteht, wobei die Variationsoberfläche (701a; 702a) die erste Zone (401) definiert, wenn sich die Variationsvorrichtung (7) in der Variationskonfiguration befindet.

5. Übertragungssystem nach Anspruch 4, wobei die Variationsvorrichtung (701) ein drehbare Rolle ist, die eine Drehachse (X) aufweist, die auf einer Ebene liegt, die quergerichtet, insbesondere orthogonal, zu der Achse (Z) ist, und die eine seitliche Oberfläche aufweist, die zumindest eine zylindrische Oberfläche (701a) umfasst; wobei, wenn sich der Ausgabekopf (1) in der Variationskonfiguration befindet, ein Abschnitt der zylindrischen Oberfläche (701a) durch die Öffnung (403) hervorsteht und die Variationsoberfläche definiert.

6. Übertragungssystem nach Anspruch 5, wobei die Rolle (701) eine Vielzahl von Winkelsektoren aufweist und jeder Winkelsektor eine jeweilige zylindrische Oberfläche (701a; 701a') aufweist, die mit einer entsprechenden Krümmung versehen ist, wobei die Krümmungen der zylindrischen Teile alle voneinander verschieden sind.

7. Übertragungssystem nach Anspruch 5, oder 6, wobei die seitliche Oberfläche auch eine flache Oberfläche (701b) umfasst; wobei, wenn sich der Ausgabekopf (1) in der Ruhekonfiguration befindet, die flache Oberfläche (701b) mit einem Abschnitt (404) des Auslassbereichs (4) ausgerichtet ist, der die Öffnung (403) umgibt.

8. Übertragungssystem nach Anspruch 4, wobei die Variationsvorrichtung (702) ein Stift ist, der eine frontale Oberfläche (702a) umfasst, und wobei, wenn sich der Ausgabekopf (1) in der Variationskonfiguration befindet, der Stift (702) in einer vorderen Stellung ist und die frontale Oberfläche (702a) durch die Öffnung (403) hervorsteht und die Variationsoberfläche definiert.

9. Übertragungssystem nach Anspruch 8, wobei der Stift (702) linear weg von und hin zu der Achse (Z) beweglich ist entlang einer Bewegungslinie, die auf einer Ebene liegt, die quergerichtet, insbesondere orthogonal, zu der Achse (Z) ist, wobei der Stift (702) beweglich ist zwischen der vorderen Stellung und einer hinteren Stellung; wobei die vordere Stellung des Stifts (702) einstellbar ist, um eine Regulierung des Durchgangsquerschnitts zu ermöglichen.

10. Übertragungssystem nach Anspruch 8, oder 9, wobei, wenn sich der Ausgabekopf (1) in der Ruhekonfiguration befindet, der Stift (702) in der hinteren Stellung ist und die frontale Oberfläche (702a) des Stifts (702) mit einem Abschnitt (404) des Auslassbereichs (4) ausgerichtet ist, der die Öffnung (403) umgibt.

11. Übertragungssystem nach Anspruch 1, wobei die erste Zone (405) und die zweite Zone (406) sich so weit erstrecken wie der Ausgabeauslass (5) und einen entsprechenden ersten Rand (405a) und zweiten Rand (406a) aufweisen, die zumindest teilweise den Ausgabeauslass (5) definieren, wobei in der Variationskonfiguration der erste Rand (405a) und der zweite Rand (406a) entlang der Achse (Z) gegeneinander versetzt sind.

12. Übertragungssystem nach Anspruch 11, wobei der Ausgabekopf (1) eine innere Zone (101) und eine Endzone (102) umfasst, wobei die zuletzt genannte die erste Zone (405) und die zweite Zone (406) umfasst, wobei die Endzone (102) abnehmbar auf der inneren Zone (101) montiert werden kann, um eine einfache Konfiguration des Ausgabekopfs (1) zu ermöglichen.

13. Übertragungssystem nach einem der vorhergehenden Ansprüche, wobei der Auslassbereich (4) die Form eines Prismas mit zumindest vier Seiten aufweist, wobei die erste Zone (401) und die zweite Zone (402) zumindest auf einander gegenüberliegenden Seiten des Prismas angeordnet sind.

14. Verfahren zum Ausgeben einer Dosierung (2) von polymerem Material von einem Ausgabekopf (1) zu einer Fördervorrichtung (6), wobei die Fördervorrichtung (6) eine Förderwand (601) umfasst und das Verfahren die folgenden Schritte umfasst:
- Ausgeben des Polymermaterials aus dem Ausgabekopf (1);
- Steuern der Ausgaberichtung (D) des Polymermaterials;
- Abtrennen einer Dosierung (2) von polymerem Material von dem Polymermaterial, das von dem Ausgabekopf (1) ausgegeben wurde;
- Veranlassen der Vorwärtsbewegung der Förderwand (601) zu dem Ausgabekopf (1) hin und Übertragen der Dosierung (2) von polymerem Material an die Förderwand (601);
- wobei das Steuern der Ausgaberichtung (D) des Polymermaterials Folgendes umfasst:
- Zuführen des Polymermaterials zu einem Ausgabeauslass (5) eines Ausgabekopfs (1) über einen geraden Auslassbereich (4), der sich entlang einer Achse (Z) erstreckt und in den Ausgabeauslass (5) führt;
- Konfigurieren einer ersten Zone (401) und einer zweiten Zone (402) des Auslassbereichs (4), die in einer Variationskonfiguration einander gegenüberliegen, in welcher sie asymmetrisch zueinander sind, um einen Durchfluss von polymerem Material in dem Auslassbereich (4) so zu beeinflussen, dass sie die Ausgaberichtung (D) des von dem Ausgabeauslass (5) ausgegebenen Polymermaterials steuern;
- Umlenken des beeinflussten Polymermaterials in eine gewünschte Ausgaberichtung (D);
- Auswählen der gewünschten Ausgaberichtung (D) in Bezug auf eine Förderwand (601) einer Fördervorrichtung (6);
- Neigen des ausgegebenen Polymermaterials zu der Förderwand (601) hin, so dass, während der Übertragung der Dosierung (2), ein distales Ende (2a) der Dosierung (2) näher an der Förderwand (601) ist als deren proximales Ende (2b).

## Revendications

1. Un système pour le transfert d'une dose (2) de matériau polymère comprenant une tête (1) de distribution du matériau polymère et au moins un dispositif de transport (6), muni d'une paroi de transport (601) ; ledit dispositif de transport (6) étant configuré pour avancer le long d'un parcours (P) à travers la tête de distribution (1) de manière à ce qu'une dose (2) obtenue à partir du matériau polymère distribué par la tête de distribution (1) puisse être transférée à la paroi de transport (601) ; et dans lequel la tête de distribution (1) comprend un conduit (3) qui est muni d'une région de sortie (4) rectiligne s'étendant le long d'un axe (Z) qui débouche dans une sortie de distribution (5) et est configurée pour alimenter le matériau polymère vers ladite sortie de distribution (5) ; **caractérisé en ce que** ladite région de sortie (4) comprend au moins une première zone (401 ; 405) et une deuxième zone (402 ; 406) l'une en face de l'autre, la tête de distribution (1) ayant au moins une configuration de variation dans laquelle la première zone (401 ; 405) et la deuxième zone (402 ; 406) sont asymétriques pour perturber un flux de matériau polymère dans la région de sortie (4) de manière à contrôler la direction de distribution (D) du matériau polymère, distribué depuis la sortie de distribution (5), et devant être transféré à la paroi de transport (601) ; dans lequel la perturbation du flux de matériau polymère dans la région de sortie (4) est configurée pour diriger le matériau polymère dans une direction de distribution (D) souhaitée par rapport à la paroi de transfert (601), la direction de distribution souhaitée étant inclinée et étant telle qu'une extrémité distale (2a) de la dose (2) est plus près de la paroi de transport (601) que son extrémité proximale (2b) ; dans lequel le système de transfert comprend un dispositif de séparation pour séparer une dose (2) de matériau polymère du matériau polymère restant distribué depuis la sortie de distribution (5), la dose (2) ainsi obtenue étant collectée depuis le dispositif de transport (6).

2. Le système de transfert selon la revendication 1, dans lequel, dans la configuration de variation, la première zone (401 ; 405) et la deuxième zone (402 ; 406) de la tête de distribution (1) sont positionnées à l'intérieur de la région de sortie (4) et se projettent vers l'axe (Z) différemment, en modifiant une section de passage de la région de sortie (4), pour générer cette asymétrie.

3. Le système de transfert selon la revendication 2, dans lequel la tête de distribution (1) a en outre une configuration de repos dans laquelle la première zone (401) et la deuxième zone (402) sont symétriques l'une par rapport à l'autre, la tête de distribution (1) comprenant un dispositif de variation (7), configuré pour placer la tête de distribution (1) dans la configuration de variation ou dans la configuration de repos, le dispositif de variation (7) étant logé à l'intérieur de la tête de distribution (1) et pouvant être commandé de l'extérieur de la tête de distribution (1) entre la configuration de variation et la configuration de repos.

4. Le système de transfert selon la revendication 3, dans lequel la deuxième zone (402) est exempte de projections et la région de sortie (4) comprend une ouverture (403) positionnée en face de la deuxième zone (402) ; et dans lequel le dispositif de variation (702) a une surface de variation (701a ; 702a) qui se projette à travers ladite ouverture (403) vers l'axe (Z), ladite surface de variation (701a ; 702a) définissant la première zone (401) lorsque le dispositif de variation (7) est dans la configuration de variation.

5. Le système de transfert selon la revendication 4, dans lequel le dispositif de variation (701) est un rouleau rotatif ayant un axe de rotation (X) qui repose dans un plan transversal, en particulier perpendiculaire, à l'axe (Z), qui est muni d'une surface latérale comprenant au moins une surface cylindrique (701a) ; dans lequel, lorsque la tête de distribution (1) est dans la configuration de variation, une portion de la surface cylindrique (701a) se projette à travers l'ouverture (403) et définit la surface de variation.

6. Le système de transfert selon la revendication 5, dans lequel le rouleau (701) a une pluralité de secteurs angulaires, chaque secteur angulaire ayant une surface cylindrique (701a; 701a') respective présentant une courbure respective, les courbures des parties cylindriques étant toutes différentes entre elles.

7. Le système de transfert selon la revendication 5, ou 6, dans lequel la surface latérale comprend également une surface plate (701b) ; dans lequel, lorsque la tête de distribution (1) est dans la configuration de repos, la surface plate (701b) est alignée avec une zone (404) de la région de sortie (4) qui entoure l'ouverture (403).

8. Le système de transfert selon la revendication 4, dans lequel le dispositif de variation (702) est une goupille qui comprend une surface avant (702a) et dans lequel, lorsque la tête de distribution (1) est dans la configuration de variation, la goupille (702) est dans une position avancée et la surface avant (702a) se projette à travers l'ouverture (403) définissant la surface de variation.

9. Le système de transfert selon la revendication 8, dans lequel la goupille (702) est mobile linéairement depuis et vers l'axe (Z) le long d'une direction de mouvement qui est située dans un plan transversal, en particulier perpendiculaire, à l'axe (Z), dans lequel la goupille (702) est mobile entre la position avancée et une position reculée ; la position avancée de la goupille (702) pouvant être réglée pour permettre un réglage de la section de passage.

10. Le système de transfert selon la revendication 8, ou 9, dans lequel, lorsque la tête de distribution (1) est dans la configuration de repos, la goupille (702) est dans la position reculée et la surface avant (702a) de la goupille (702) est alignée avec une zone (404) de la région de sortie (4) qui entoure l'ouverture (403).

11. Le système de transfert selon la revendication 1, dans lequel la première zone (405) et la deuxième zone (406) s'étendent jusqu'à la sortie de distribution (5) et ont un premier bord (405a) et un deuxième bord (406a) respectifs qui définissent au moins partiellement la sortie de distribution (5), dans lequel, dans la configuration de variation, le premier bord (405a) et le deuxième bord (406a) sont décalés l'un par rapport à l'autre le long de l'axe (Z).

12. Le système de transfert selon la revendication 11, dans lequel la tête de distribution (1) comprend une zone intérieure (101) et une zone d'extrémité (102), cette dernière comprenant la première zone (405) et la deuxième zone (406), la zone d'extrémité (102) pouvant être montée de façon amovible sur la zone intérieure (101) pour permettre une configuration facile de la tête de distribution (1).

13. Le système de transfert selon l'une des revendications précédentes, dans lequel la région de sortie (4) a la forme d'un prisme ayant au moins quatre faces, la première zone (401) et la deuxième zone (402) étant positionnées au moins sur des faces opposées du prisme.

14. Un procédé de transfert d'une dose (2) de matériau polymère d'une tête de distribution (1) à un dispositif de transport (6), dans lequel le dispositif de transport (6) comprend une paroi de transport (601) et le procédé comprend les étapes suivantes :
- distribuer le matériau polymère depuis la tête de distribution (1) ;
- contrôler la direction de distribution (D) du matériau polymère ;
- séparer une dose (2) de matériau polymère du matériau polymère distribué depuis la tête de distribution (1) ;
- faire avancer la paroi de transport (601) vers la tête de distribution (1) et transférer la dose (2) de matériau polymère à la paroi de transport (601) ;
- dans lequel ledit contrôle de la direction de distribution (D) du matériau polymère comprend
- alimenter le matériau polymère vers une sortie de distribution (5) d'une tête de distribution (1) au moyen d'une région de sortie (4) rectiligne qui s'étend le long d'un axe (Z) et débouche dans ladite sortie de distribution (5) ;
- configurer une première zone (401) et une deuxième zone (402) de la région de sortie (4) qui sont l'une en face de l'autre dans une configuration de variation, dans laquelle elles sont asymétriques, pour perturber un flux de matériau polymère dans la région de sortie (4) de manière à contrôler la direction de distribution (D) du matériau polymère distribué depuis la sortie de distribution (5) ;
- diriger le matériau polymère perturbé dans une direction de distribution (D) souhaitée ;
- sélectionner la direction de distribution (D) souhaitée par rapport à une paroi de transport (601) d'un dispositif de transport (6) ;
- incliner le matériau polymère distribué vers la paroi de transport (601) de manière à ce que, pendant le transfert de la dose (2), une extrémité distale (2a) de la dose (2) soit plus près de la paroi de transport (601) que son extrémité proximale (2b).
